(19) Europäisches Patentamt
European Patent Office
Office européen des brevets

(11) EP 4 174 537 A1

(12) **EUROPEAN PATENT APPLICATION**
published in accordance with Art. 153(4) EPC

(43) Date of publication:
**03.05.2023 Bulletin 2023/18**

(21) Application number: **21861764.5**

(22) Date of filing: **31.08.2021**

(51) International Patent Classification (IPC):
***G02B 5/26*** *(2006.01)*

(52) Cooperative Patent Classification (CPC):
**G02B 5/26**

(86) International application number:
**PCT/JP2021/031819**

(87) International publication number:
**WO 2022/045343 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 JP 2020145901**

(71) Applicant: **SEKISUI CHEMICAL CO., LTD.**
**530-0047 (JP)**

(72) Inventors:
- **SUN, Ren-de**
**Mishima-gun, Osaka 618-0021 (JP)**
- **FUKUI, Hiroji**
**Mishima-gun, Osaka 618-0021 (JP)**
- **NAKASUGA, Akira**
**Mishima-gun, Osaka 618-0021 (JP)**

(74) Representative: **Cabinet Beau de Loménie**
**158, rue de l'Université**
**75340 Paris Cedex 07 (FR)**

(54) **NEAR-INFRARED RAY REFLECTIVE BLACK PARTICLE AND NEAR-INFRARED RAY REFLECTIVE LAMINATE**

(57) The present invention provides near-infrared reflective black particles and a near-infrared reflective laminate each exhibiting high blackness, having high reflectivity in the near-infrared region, and useful for applications such as heat-shielding paints for automobile interiors and exteriors, buildings, ships, tanks, warehouses, and the like, heat-shielding compositions for clothing and textiles, and security identification/anti-counterfeiting inks. Provided are near-infrared reflective black particles each including: a shell containing a near-infrared transmissive material; and a core containing a near-infrared reflective material, the near-infrared reflective black particles having an average reflectance of 15% or lower in a visible light region from 400 to 800 nm wavelength, an average reflectance of 50% or higher in a near-infrared region from 900 to 2500 nm wavelength, and a lightness value L* of 30 or less in the CIE LAB (L*a*b*) color system.

EP 4 174 537 A1

## Description

TECHNICAL FIELD

The present invention relates to near-infrared reflective black particles and a near-infrared reflective laminate each exhibiting high blackness, having high reflectivity in the near-infrared region, and useful for applications such as heat-shielding paints for automobile interiors and exteriors, buildings, ships, tanks, warehouses, and the like, heat-shielding compositions for clothing and textiles, and security identification/anti-counterfeiting inks.

BACKGROUND ART

Conventionally, the roofs and outer walls of buildings, automobiles, etc. are often painted with a dark-colored paint for the purpose of making contamination and the like inconspicuous. Pigments used in dark-colored paints are generally carbon black, iron oxide black, etc. These pigments absorb not only light in the visible light region but also light in the infrared (heat ray) region, and therefore the inside of the buildings, automobiles and the like painted with such paints tend to become hot.

A heat-shielding black paint has been proposed in order to reduce the rise in internal temperature of buildings, automobiles, and the like with a dark-colored exterior coating (Patent Literature 1). However, such a black paint is based on a compound containing a harmful heavy metal element such as antimony or chromium, leaving environmental problems.

Also proposed is a paint used in coating which includes, unlike the above, application of a white paint as an undercoat to exterior walls of buildings or the like and application of an infrared reflective or infrared transmissive paint on the white paint coating to block the absorption of direct sunlight, thereby preventing temperature increase in the room. However, in this case, repair of the coating disadvantageously needs to also include repair of the white undercoat (coating with a white paint as an undercoat).

Further, also proposed are near-infrared reflective coated particles in which a white pigment is coated with a black or chromatic dye that reflects or transmits near-infrared rays for the purpose of providing colorants for paints that do not require a white coating as an undercoat and for printing inks (Patent Literature 2).

CITATION LIST

- Patent Literature

Patent Literature 1: JP S56-109257 A
Patent Literature 2: JP 5021174 B

SUMMARY OF INVENTION

- Technical Problem

However, to provide a coloring property to the infrared reflective particles proposed in Patent Literature 2, a chromatic pigment needs to be mixed with a non-coloring film-forming component (polymer precursor) to coat the surfaces of white particles by polymerization of the non-coloring film-forming component. In short, the pigment used cannot directly coat the surfaces of the white particles, only via the film-forming component. Such a method not only requires a multi-step process, but also has an issue in uniformity of the coating layer as controlling the thickness of the coating layer is difficult. As a result, the coloring property and infrared reflectivity may be disadvantageously affected adversely.

The recent development of lasers, especially semiconductor lasers and sensors for them, has increased the fields which require functional pigments with optical properties not found in conventionally used pigments. For example, in the field of printing inks, there is a need for infrared reflective pigments that can be used for purposes such as printing hidden bar codes and hidden two-dimensional codes. The hidden bar codes and hidden two-dimensional codes are printed with inks containing infrared reflective pigments to allow information that cannot be distinguished by the naked eye to be read with an infrared reader.

The present invention has been made in view of the above situation. The present invention aims to provide near-infrared reflective black particles and a near-infrared reflective laminate each exhibiting high blackness, having high reflectivity in the near-infrared region, and useful for applications such as heat-shielding paints for automobile interiors and exteriors, buildings, ships, tanks, warehouses, and the like, heat-shielding compositions for clothing and

textiles, and security identification/anti-counterfeiting inks.

- Solution to Problem

The present invention relates to near-infrared reflective black particles each including: a shell containing a near-infrared transmissive material; and a core containing a near-infrared reflective material, the near-infrared reflective black particles having an average reflectance of 15% or lower in a visible light region from 400 to 800 nm wavelength, an average reflectance of 50% or higher in a near-infrared region from 900 to 2500 nm wavelength, and a lightness value L* of 30 or less in the CIE LAB (L*a*b*) color system.

The present invention will be described in detail below.

As a result of intensive studies, the present inventors found out that a colored material having high infrared reflectivity can be obtained by coating the surface of a near-infrared reflective material with a near-infrared transmissive material. Thus, the present invention was completed.

The near-infrared reflective black particles of the present invention each have a shell containing a near-infrared transmissive material and a core containing a near-infrared reflective material.

With such a structure, the black particles can have high infrared reflectivity while having a brown to black color.

The near-infrared reflective black particles of the present invention have an average reflectance of 15% or lower in a visible light region of 400 to 800 nm wavelength.

The average reflectance within the above range allows the black particles to absorb most visible light, which enables development of high blackness in the visible light region.

The average reflectance is preferably 12% or lower, more preferably 10% or lower.

The average reflectance can be measured, for example, using a spectrophotometer equipped with an integrating sphere.

The near-infrared reflective black particles of the present invention have an average reflectance of 50% or higher in a near-infrared region of 900 to 2,500 nm wavelength.

The average reflectance within the above range can increase the infrared reflectivity, reducing or inhibiting heat absorption.

The average reflectance is preferably 60% or higher, more preferably 70% or higher.

The average reflectance can be measured, for example, using a spectrophotometer equipped with an integrating sphere.

The near-infrared reflective black particles of the present invention have a lightness value L* of 30 or less in the CIE LAB (L*a*b*) color system.

With the lightness value L* within the above range, the black particles can develop high blackness.

The lightness value L* is preferably 25 or less, more preferably 20 or less.

The lightness value L* can be measured, for example, using a spectrophotometer in accordance with JIS Z 8722:2009.

The average reflectance in the visible light region, the average reflectance in the near-infrared region, and the lightness value L* can be controlled by adjusting the types of the near-infrared transmissive material and the near-infrared reflective material, the core/shell ratio, and the like.

The near-infrared reflective black particles of the present invention each have a shell containing a near-infrared transmissive material.

Having such a shell, the black particles can reduce or inhibit infrared absorption.

Examples of the near-infrared transmissive material include oxazine resins, azo pigments, phthalocyanine dyes, anthraquinone dyes, and perinone/perylene dyes.

Preferred among these is an oxazine resin.

The oxazine resin is preferably an aromatic oxazine resin having an aromatic ring.

Examples of the aromatic oxazine resin include a benzoxazine resin having a benzene ring in the basic structure of the resin and a naphthoxazine resin having a naphthalene ring in the basic structure of the resin.

Preferred among these is a naphthoxazine resin showing high visible light absorption and higher blackness.

The benzoxazine resin may have multiple benzene rings in the repeating unit. The naphthoxazine resin may also have multiple naphthalene rings in the repeating unit.

The oxazine resin is prepared by ring-opening polymerization of its precursor, oxazine.

The structures of aromatic oxazines are shown below as examples of the structure of the oxazine. The following formula (1) shows an exemplary partial structure of benzoxazine. The following formulas (2) and (3) each show an exemplary partial structure of naphthoxazine.

[Chem. 1]

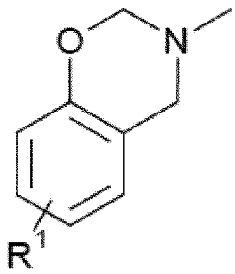

· · · (1)

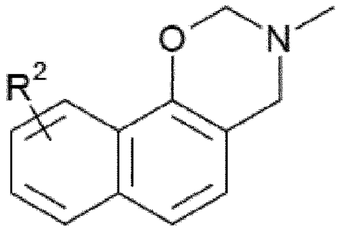

· · · (2)

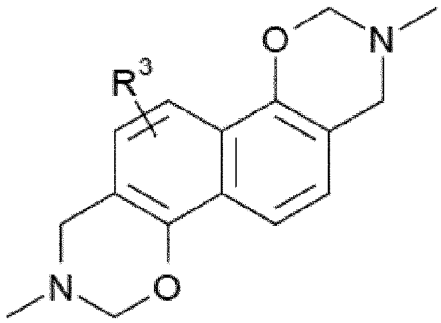

· · · (3)

$R^1$ in the formula (1), $R^2$ in the formula (2), and $R^3$ in the formula (3) each independently represent a hydrogen atom, a hydroxy group, a halogen atom, an alkyl group, or an alkoxy group.

Examples of the halogen atom include fluorine, chlorine, bromine, and iodine atoms.

Examples of the alkyl group include methyl, ethyl, n-propyl, isopropyl, n-butyl, isobutyl, and t-butyl groups.

Examples of the alkoxy group include methoxy, ethoxy, n-propoxy, isopropoxy, n-butoxy, isobutoxy, and t-butoxy groups.

The aromatic oxazine has a six-membered ring added to a benzene or naphthalene ring. The six-membered ring contains oxygen and nitrogen and hence the name "oxazine".

One six-membered ring containing oxygen and nitrogen may be added as in the formulas (1) and (2), or multiple six-membered rings may be added as in the formula (3).

The following formulas (4) to (6) show examples of repeating units of oxazine resins obtained by ring-opening polymerization of the aromatic oxazines.

[Chem. 2]

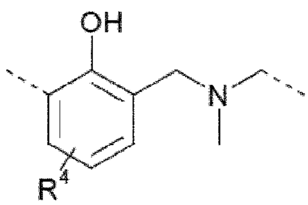

· · · (4)

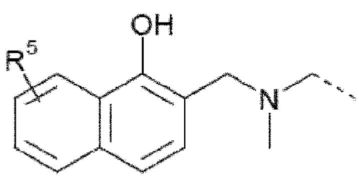

· · · (5)

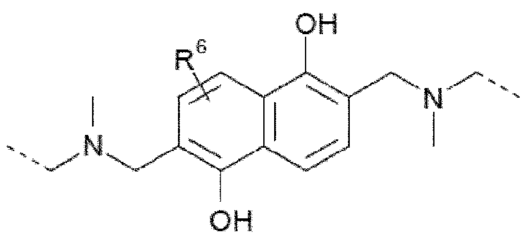

(6)

$R^4$ in the formula (4), $R^3$ in the formula (5), and $R^6$ in the formula (6) each independently represent a hydrogen atom, a hydroxy group, a halogen atom, an alkyl group, or an alkoxy group.

Examples of the halogen atom include fluorine, chlorine, bromine, and iodine atoms.

Examples of the alkyl group include methyl, ethyl, n-propyl, isopropyl, n-butyl, isobutyl, and t-butyl groups.

Examples of the alkoxy group include methoxy, ethoxy, n-propoxy, isopropoxy, n-butoxy, isobutoxy, and t-butoxy groups.

The oxazine resin preferably has an oxygen content of 5.0% by weight or more, more preferably 10.0% by weight or more, and preferably 50.0% by weight or less, more preferably 40.0% by weight or less.

The oxazine resin preferably has a nitrogen content of 0.5% by weight or more, more preferably 1.0% by weight or more, and preferably 20.0% by weight or less, more preferably 10.0% by weight or less.

The oxygen content and nitrogen content can be measured, for example, by X-ray photoelectron spectroscopy.

The weight ratio of carbon to oxygen (carbon/oxygen) in the oxazine resin is preferably 1.0 or more, more preferably 2.0 or more, and preferably 30.0 or less, more preferably 25.0 or less.

The weight ratio of carbon to nitrogen (carbon/nitrogen) in the oxazine resin is preferably 2.5 or more, more preferably 5.0 or more, and preferably 100.0 or less, more preferably 50.0 or less.

The weight ratios carbon/oxygen and carbon/nitrogen can be measured, for example, by X-ray photoelectron spectroscopy.

Examples of a method for producing the oxazine resin include a method including reacting a mixed solution containing triazine, dihydroxynaphthalene, and a solvent, and a method including reacting a mixed solution containing formaldehyde, an aliphatic amine, dihydroxynaphthalene, and a solvent. A naphthoxazine resin can be produced by any of the above methods.

A benzoxazine resin can be produced by using a phenol (e.g., phenol, bisphenol) instead of dihydroxynaphthalene in any of the above methods.

In the method for producing the naphthoxazine resin, first, a mixed solution containing triazine, dihydroxynaphthalene, and a solvent or a mixed solution containing formaldehyde, an aliphatic amine, dihydroxynaphthalene, and a solvent is prepared.

The triazine includes a triazine derivative in which an alkyl or aryl group is bonded to a nitrogen atom. The triazine is preferably a triazine derivative.

The triazine derivative may have one alkyl or aryl group or multiple alkyl or aryl groups.

Examples of the triazine derivative include 1,3,5-trimethylhexahydro-1,3,5-triazine and 1,3,5-triphenylhexahydro-1,3,5-triazine.

Since the formaldehyde is unstable, formalin, a formaldehyde solution, is preferably used. Formalin usually contains, in addition to formaldehyde and water, a small amount of methanol as a stabilizer. Formaldehyde used in the present invention may be formalin, as long as the formaldehyde content is clear.

Paraformaldehyde is a polymerized form of formaldehyde and can also be used as a raw material. Still, since paraformaldehyde is less reactive, formalin mentioned above is preferably used.

The aliphatic amine is represented by the formula $R\text{-}NH_2$ where R is preferably an alkyl group having a carbon number of 5 or less. Examples of the alkyl group having a carbon number of 5 or less include methyl, ethyl, n-propyl, isopropyl, cyclopropyl, n-butyl, isobutyl, s-butyl, t-butyl, cyclobutyl, cyclopropylmethyl, n-pentyl, cyclopentyl, cyclopropylethyl, and cyclobutylmethyl groups.

Since a smaller molecular weight is preferred, the substituent R is preferably a methyl group, an ethyl group, a propyl group, or the like. Preferred examples of actual compounds thereof include methylamine, ethylamine, and propylamine. The most preferred one is methylamine, which has the smallest molecular weight.

The dihydroxynaphthalene has many isomers. Examples thereof include 1,3-dihydroxynaphthalene, 1,5-dihydroxynaphthalene, 1,6-dihydroxynaphthalene, 1,7-dihydroxynaphthalene, 2,3-dihydroxynaphthalene, 2,6-dihydroxynaphthalene, and 2,7-dihydroxynaphthalene.

Preferred among these are 1,5-dihydroxynaphthalene and 2,6-dihydroxynaphthalene for their high reactivity. More preferred is 1,5-dihydroxynaphthalene because it has the highest reactivity.

In the method of adding formaldehyde and an aliphatic amine without adding the triazine, the ratio of the three components including dihydroxynaphthalene, an aliphatic amine, and formaldehyde in the mixed solution is most preferably 1 mole of aliphatic amine and 2 moles of formaldehyde per 1 mol of dihydroxynaphthalene.

Since raw materials may be lost due to volatilization or the like during the reaction depending on the reaction conditions, the optimum blending ratio may not be exactly the above ratio. Still, the three components are preferably blended in the range of 0.8 to 2.2 moles of aliphatic amine and 1.6 to 4.4 moles of formaldehyde per 1 mole of dihydroxynaphthalene.

When the amount of the aliphatic amine is set to 0.8 moles or more, an oxazine ring can be sufficiently formed and the polymerization can suitably proceed. When the amount of the aliphatic amine is set to 2.2 moles or less, the reaction does not excessively consume formaldehyde, and therefore the reaction proceeds smoothly and the desired

naphthoxazine can be obtained.

Similarly, when the amount of formaldehyde is set to 1.6 moles or more, an oxazine ring can be sufficiently formed and the polymerization can suitably proceed. When the amount of formaldehyde is set to 4.4 moles or less, the occurrence of side reactions is favorably reduced.

The mixed solution contains a solvent to dissolve and react the above two or three raw materials.

Examples of the solvent include water, alcohols (e.g., methanol, ethanol, isopropanol), ketones (e.g., acetone, methyl ethyl ketone), tetrahydrofuran, dioxane, chloroform, ethyl acetate, dimethyl formamide, and dimethyl sulfoxide.

The solvent used may be a single-component solvent or a solvent mixture containing two or more solvents. The solvent used preferably has a solubility parameter (SP value) of 9.0 or higher.

Examples of the solvent having an SP value of 9.0 or higher include ethanol (12.7), methanol (14.7), isopropanol (11.5), cresol (13.3), ethylene glycol (14.2), phenol (14.5), water (23.4), N,N-dimethylformamide (DMF, 12.3), dimethyl sulfoxide (DMSO, 13.0), methyl ethyl ketone (9.3), dioxane (10.3), ethyl acetate (9.0), chloroform (9.4), and acetone (10.0).

The solvent having an SP value of 9.0 or higher is more preferably a solvent having an SP value of 9.0 to 15.0. When the solvent used contains a single component alone, the boiling point is preferably 50°C to 150°C. Still more preferred is a solvent having a boiling point of 50°C to 130°C and an SP value of 9.0 or higher.

When the solvent is a solvent mixture containing two or more solvents, the solvent mixture preferably contains a solvent having a boiling point of 150°C or higher in an amount of 60% by volume or less. Use of such a solvent enables production of particles having high average sphericity.

The lower limit of the amount of the solvent having a boiling point of 150°C or higher is more preferably 45% by volume.

The amount of the solvent in the mixed solution is not limited. Still, when the amount of the raw materials (solute) including dihydroxynaphthalene, triazine, an aliphatic amine, and formaldehyde is 100 parts by mass, the amount of the solvent added is normally preferably 300 to 200,000 parts by mass (equivalent to a molar concentration of the solute of 1.0 M to 0.001 M). When the amount of the solvent is 300 parts by mass or more, the solubility of the solute increases. When the amount of the solvent is 200,000 parts by mass or less, the concentration is appropriate, which promotes the reaction.

The method for producing an oxazine resin includes reacting the mixed solution. The reaction proceeds to form an oxazine resin.

In the reaction, the oxazine ring formed is opened by continuous warming, and polymerization occurs. Thus, a so-called oxazine resin is formed.

In the step of reacting the mixed solution, the reaction proceeds gradually even at room temperature. For efficient proceeding, the reaction is preferably performed at a temperature of 50°C to 150°C. The reaction time can be adjusted depending on the temperature and is normally preferably 30 minutes to 20 hours. The reaction under the above conditions produces oxazine resin particles.

Further, when the mixed solution contains a solid substrate (e.g., a substrate or particles of glass, metal, or oxide), the oxazine resin can be deposited on the surface of the substrate. In other words, the surface of the substrate can be coated with the oxazine resin.

The particle size of oxazine resin particles and the shell thickness can be adjusted by parameters such as the solution concentration, reaction temperature, molar ratio of raw materials, reaction time, and stirring conditions.

The ring-opening polymerization of oxazine is accelerated by heating. The oxazine resin particles obtained after the reaction are therefore preferably heat-treated at 100°C to 300°C, more preferably at 150°C to 250°C for sufficient proceeding of the polymerization. The heating time is preferably 30 minutes to 50 hours.

The heating is more preferably performed in an inert gas atmosphere such as nitrogen or argon gas atmosphere in a closed container to reduce evaporation.

The near-infrared transmissive material preferably has an average transmittance of 60% or higher in the near-infrared region from 900 to 2500 nm wavelength.

With the transmittance within the above range, the near-infrared transmissive material can sufficiently reduce or inhibit infrared absorption.

The average transmittance is more preferably 70% or higher.

The average transmittance can be measured, for example, using a spectrophotometer equipped with an integrating sphere.

The near-infrared transmissive material preferably has an average reflectance of 15% or lower, more preferably 12% or lower, in the visible light region from 400 to 800 nm wavelength.

The near-infrared transmissive material preferably has a zeta potential (surface potential) of -70 to +80 mV.

With the zeta potential of the near-infrared transmissive material within the above range, the black particles can have excellent particle size uniformity to have good dispersibility in a solvent.

The lower limit of the zeta potential is preferably - 60 mV and the upper limit thereof is preferably +70 mV.

The zeta potential can be determined using, for example, a micro-electrophoresis zeta potential analyzer. A

solution containing the black particles dispersed therein is poured into a measurement cell, and a voltage is applied thereto under microscopic observation. The potential at which particles stop moving (stand still) is the zeta potential.

The shell may contain, in addition to the near-infrared transmissive material, additives such as a binder resin or an ultraviolet absorber.

The shells containing a near-infrared transmissive material have an average thickness of 0.01 um or larger and 1.0 um or smaller.

With the average shell thickness within the above range, sufficient blackness and high near-infrared reflectivity can be achieved.

The average shell thickness is more preferably 0.05 um or larger and 0.5 um or smaller.

The coefficient of variation (CV value) of the shell thickness is preferably 20% or lower.

When the CV value of the shell thickness is within the above range, the black particles have better monodispersibility, which facilitates close packing of the particles when used as a black pigment. As a result, the effect of blocking visible light can be increased.

The CV value of the shell thickness is more preferably 15% or lower.

The CV value (%) of the shell thickness is a value in percentage obtained by dividing the standard deviation by the average shell thickness, and is a numerical value obtainable by the following equation. A smaller CV value means a smaller variation in shell thickness. CV value of shell thickness (%) = (standard deviation of shell thickness/average shell thickness) $\times$ 100

The average shell thickness and the standard deviation of the shell thickness can be obtained, for example, by measuring the particle sizes of the cores containing the later-described near-infrared reflective material and the particle sizes of the near-infrared reflective black particles using an electron microscope.

The shell preferably has a density of 1.9 $g/cm^3$ or less.

With a density of the shell of 1.9 $g/cm^3$ or less, the black particles can have high dispersibility. The density is preferably 1.2 $g/cm^3$ or more, and more preferably 1.8 $g/cm^3$ or less.

The density of the shell can be obtained, for example, by measuring the density of the core containing the later-described near-infrared reflective material and the density of the near-infrared reflective black particles using an electronic densimeter or the like.

The shell preferably has a volume resistivity of $1.0 \times 10^7$ Ω·cm or more.

The volume resistivity of $1.0 \times 10^7$ Ω·cm or more ensures high insulation.

The volume resistivity is more preferably $1.0 \times 10^8$ Ω·cm or more, still more preferably $1.0 \times 10^{11}$ Ω·cm or more.

The volume resistivity can be measured using, for example, a powder resistivity measurement system.

In analysis of the shell by time-of-flight secondary ion mass spectrometry (TOF-SIMS), at least one of a mass spectrum derived from a benzene ring or a mass spectrum derived from a naphthalene ring is preferably detected.

With such a structure, the particles can be highly dense.

In the present invention, the mass spectrum derived from a benzene ring refers to a mass spectrum at around 77.12 and the mass spectrum derived from a naphthalene ring refers to a mass spectrum at around 127.27.

The analysis can be performed using, for example, a TOF-SIMS apparatus (available from ION-TOF GmbH).

The near-infrared reflective black particles of the present invention each have a core containing a near-infrared reflective material.

Having such a structure, the black particles can reflect infrared rays to reduce or inhibit heat absorption.

Examples of the near-infrared reflective material include inorganic materials such as metals, and oxides, sulfides, sulfates, nitrides, hydroxides, and carbonates of metals or metalloids.

Examples of the metals include aluminum, barium, zinc, titanium, zirconium, calcium, magnesium, and strontium.

Examples of the metalloids include silicon, boron, germanium, and antimony.

Examples of the metal oxides include aluminum oxide, barium oxide, zinc oxide, titanium dioxide, and zirconium dioxide.

Examples of the metal sulfides include barium sulfide, zinc sulfide, titanium disulfide, and zirconium disulfide.

Examples of the metal sulfates include barium sulfate, zinc sulfate, titanium sulfate, and zirconium sulfate.

Examples of the metal nitrides include aluminum nitride, barium nitride, zinc nitride, titanium nitride, and zirconium nitride.

Examples of the metal hydroxides include calcium hydroxide and magnesium hydroxide.

Examples of the metal carbonates include calcium carbonate, magnesium carbonate, and strontium carbonate.

Examples of the oxides, sulfides, sulfates, nitrides, hydroxides, and carbonates of metalloids include oxides, sulfides, sulfates, nitrides, hydroxides, and carbonates of metalloids such as silicon, boron, germanium, and antimony.

Examples of the metalloid oxides include silicon oxide, silicon dioxide, boron oxide, germanium dioxide, and antimony trioxide.

Examples of the metalloid sulfides include silicon sulfide, boron sulfide, germanium disulfide, and antimony

trisulfide.

Examples of the metalloid nitrides include silicon nitride, boron nitride, germanium nitride, and antimony nitride.

Preferred among these are metals, and oxides, sulfides, sulfates, nitrides, carbonates, and hydroxides of metals or metalloids, more preferred are metals, metal oxides, metal sulfides, metal sulfates, metal carbonates, metalloid oxides, and metalloid nitrides, and still more preferred are aluminum, aluminum oxide, titanium dioxide, zirconium oxide, zinc sulfide, barium sulfate, calcium carbonate, silicon dioxide, and boron nitride.

The near-infrared reflective material preferably contains an inorganic material having a band gap of 3.0 eV or more.

When the band gap is within the above range, high reflectivity in the near-infrared region is likely to be achieved.

The band gap is more preferably 3.2 eV or more.

The band gap can be determined, for example, by measuring the optical absorption edge by optical spectroscopy.

The near-infrared reflective material preferably has an average reflectance of 70% or higher in the near-infrared region from 900 to 2500 nm wavelength.

When the average reflectance is within the above range, infrared rays can be sufficiently reflected, whereby heat absorption is reduced or inhibited.

The average reflectance is more preferably 75% or higher.

The average reflectance can be measured, for example, using a spectrophotometer equipped with an integrating sphere.

The near-infrared reflective material preferably has an average reflectance of 80% or lower, more preferably 70% or lower, in the visible light region from 400 to 800 nm wavelength.

The average reflectance can be measured, for example, using a spectrophotometer equipped with an integrating sphere.

The cores containing a near-infrared reflective material preferably have an average particle size of 0.02 um or more, more preferably 0.05 um or more, and preferably 10.0 um or less, more preferably 5.0 um or less.

The CV value of the core particle size is preferably 30% or lower, more preferably 20% or lower.

The CV value (%) of the core particle size is a value in percentage obtained by dividing the standard deviation by the average particle size, and is the numerical value obtainable by the following equation. A smaller CV value means less variation in particle size.

$$\text{CV value (\%) of core particle size} = (\text{standard deviation of core particle size}/\text{average core particle size}) \times 100$$

The average core particle size and the standard deviation of the core particle size can be measured, for example, using a FE-TEM.

The cores have an average sphericity of 70% or higher.

With such an average sphericity, the effect of the present invention is better obtained.

The average sphericity is more preferably 80% or higher.

The sphericity (breadth/length) can be determined by analyzing an electron micrograph taken with a FE-TEM or FE-SEM using an image analyzer. The average sphericity can be calculated by obtaining the average of sphericity values of, for example, arbitrary selected 100 particles in the electron micrograph.

The near-infrared reflective black particles of the present invention preferably have an average particle size of 0.05 um or more, more preferably 0.1 um or more, and preferably 10.0 um or less, more preferably 5.0 um or less.

The near-infrared reflective black particles of the present invention preferably have a CV value of the particle size of 30% or lower, more preferably 20% or lower.

The CV value (%) of the particle size is a value in percentage obtained by dividing the standard deviation by the average particle size, and is a numerical value obtainable by the following equation. A smaller CV value means a smaller variation in particle size.

$$\text{CV value of particle size (\%)} = (\text{standard deviation of particle size}/\text{average particle size}) \times 100$$

The average particle size and the standard deviation can be measured, for example, using a FE-TEM.

The near-infrared reflective black particles of the present invention preferably have an average sphericity of 70% or higher, more preferably 80% or higher.

The sphericity (breadth/length) can be determined by analyzing an electron micrograph taken with a FE-TEM

or FE-SEM using an image analyzer. The average sphericity can be calculated by obtaining the average of sphericity values of, for example, arbitrary selected 100 particles in the electron micrograph.

Examples of a method for producing the near-infrared reflective black particles of the present invention include a method in which cores containing a near-infrared reflective material are mixed with a near-infrared transmissive material so that a shell containing the near-infrared reflective material is deposited on the surface of each core containing a near-infrared reflective material.

Specifically, in the method for producing the oxazine resin, for example, the cores containing a near-infrared reflective material are further mixed with the mixed solution obtained by mixing the raw materials of the oxazine resin, and reacted so that a shell containing a near-infrared transmissive material is deposited on the surface of each core.

According to another aspect of the present invention, provided is a near-infrared reflective laminate including: a layer containing a near-infrared transmissive material; and a layer containing a near-infrared reflective material, laminated on each other to constitute a laminated structure, the near-infrared reflective laminate having an average reflectance of 15% or lower in a visible light region from 400 to 800 nm wavelength, an average reflectance of 50% or higher in a near-infrared region from 900 to 2500 nm wavelength, and a lightness value L* of 30 or less in the CIE LAB (L*a*b*) color system.

The near-infrared reflective laminate according to another aspect of the present invention has a laminated structure in which a layer containing a near-infrared transmissive material and a layer containing a near-infrared reflective material are laminated on each other.

Having such a structure, the laminate can have high infrared reflectivity while having a brown to black color.

The near-infrared reflective laminate according to another aspect of the present invention has an average reflectance of 15% or lower in the visible light region from 400 to 800 nm wavelength.

Having the average reflectance within the above range, the laminate absorbs most visible light, which enables development of high blackness in the visible light region.

The average reflectance is preferably 12% or lower, more preferably 10% or lower.

The average reflectance can be measured, for example, using a spectrophotometer equipped with an integrating sphere.

The near-infrared reflective laminate according to another aspect of the present invention has an average reflectance of 50% or higher in the near-infrared region from 900 to 2500 nm wavelength.

The average reflectance within the above range can increase the infrared reflectivity, reducing or inhibiting heat absorption.

The average reflectance is preferably 60% or higher, more preferably 70% or higher.

The average reflectance can be measured, for example, using a spectrophotometer equipped with an integrating sphere.

The near-infrared reflective laminate according to another aspect of the present invention has a lightness value L* of 30 or less in the CIE LAB (L*a*b*) color system.

With the lightness value L* within the above range, the laminate can develop high blackness.

The lightness value L* is preferably 25 or less, more preferably 20 or less.

The lightness value L* can be measured, for example, using a spectrophotometer in accordance with JIS Z 8722:2009.

The average reflectance in the visible light region, the average reflectance in the near-infrared region, and the lightness value L* can be controlled by adjusting the types of the near-infrared transmissive material and near-infrared reflective material, the ratio of the layers, and the like.

The near-infrared reflective laminate according to another aspect of the present invention includes the layer containing a near-infrared transmissive material.

Including the layer, the laminate can reduce or inhibit infrared absorption.

Examples of the near-infrared transmissive material include those exemplified as the near-infrared transmissive material constituting the near-infrared reflective black particles of the present invention.

The layer containing a near-infrared transmissive material may contain, in addition to the near-infrared transmissive material, additives such as a binder resin or an ultraviolet absorber.

The layer containing a near-infrared transmissive material preferably has a thickness of 0.1 um or larger, more preferably 0.2 um or larger, and preferably 100 um or smaller, more preferably 50 um or smaller.

The layer containing a near-infrared transmissive material preferably has a density of 1.80 g/$cm^3$ or less.

The density is preferably 1.20 g/$cm^3$ or more, and is more preferably 1.70 g/$cm^3$ or less.

The density can be measured, for example, using an electronic densimeter.

The layer containing a near-infrared transmissive material preferably has a volume resistivity of $1.0 \times 10^7$ $\Omega$·cm or more.

The volume resistivity of $1.0 \times 10^7$ $\Omega$·cm or more ensures high insulation.

The volume resistivity is more preferably $1.0 \times 10^8$ $\Omega$·cm or more, still more preferably $1.0 \times 10^{11}$ $\Omega$·cm or

more. The volume resistivity is preferably $1.0 \times 10^{18}$ Ω·cm or less.

The volume resistivity can be measured using, for example, a powder resistivity measurement system.

In analysis of the layer containing a near-infrared transmissive material by time-of-flight secondary ion mass spectrometry (TOF-SIMS), at least one of a mass spectrum derived from a benzene ring or a mass spectrum derived from a naphthalene ring is preferably detected.

With such a structure, the particles can be highly dense.

In the present invention, the mass spectrum derived from a benzene ring refers to a mass spectrum at around 77.12 and the mass spectrum derived from a naphthalene ring refers to a mass spectrum at around 127.27.

The measurement can be performed using, for example, a TOF-SIMS device (available from IONTOF GmbH).

The near-infrared reflective laminate according to another aspect of the present invention has a layer containing a near-infrared reflective material.

Having such a structure, the laminate can reflect infrared rays to reduce or inhibit heat absorption.

Examples of the near-infrared reflective material include those exemplified as the near-infrared reflective material constituting the near-infrared reflective black particles of the present invention.

The layer containing a near-infrared reflective material preferably has a thickness of 0.05 um or larger, more preferably 0.1 um or larger, and preferably 5000 um or smaller, more preferably 3000 um or smaller.

Examples of a method for producing the near-infrared reflective laminate according to another aspect of the present invention include a method in which the layer containing a near-infrared reflective material is formed first and then the layer containing a near-infrared transmissive material is formed on the layer containing a near-infrared reflective material.

Specific examples of the method include a method in which the layer containing a near-infrared reflective material is formed and then the oxazine resin obtained by the above method is applied to be laminated on the layer, and a method in which the layer containing a near-infrared reflective material is formed and then the layer is added to the mixed solution for synthesizing the oxazine resin, followed by progression of the reaction so that the oxazine resin is deposited on the layer.

The near-infrared reflective black particles of the present invention and the near-infrared reflective laminate according to another aspect of the present invention are usable for applications including paints such as heat-shielding paints for automobiles, buildings, ships, tanks, warehouses, and the like, heat-shielding composition for clothing and textiles, and inks such as security identification inks and anti-counterfeiting inks.

The present invention also encompasses a paint containing the near-infrared reflective black particles of the present invention, an ink containing the near-infrared reflective black particles of the present invention, a paint containing the near-infrared reflective laminate according to another aspect of the present invention, and an ink containing the near-infrared reflective laminate according to another aspect of the present invention.

- Advantageous Effects of Invention

The present invention can provide near-infrared reflective black particles and a near-infrared reflective laminate each exhibiting high blackness, having high reflectivity in the near-infrared region, and useful for applications such as heat-shielding paints for automobile interiors and exteriors, buildings, ships, tanks, warehouses, and the like, heat-shielding compositions for clothing and textiles, and security identification/anti-counterfeiting inks.

## DESCRIPTION OF EMBODIMENTS

Embodiments of the present invention are more specifically described with reference to, but not limited to, examples below.

(Example 1)

First, 2.0 g of 1,5-dihydroxynaphthalene (1,5-DHN, available from Tokyo Chemical Industry Co., Ltd.) and 1.62 g of 1,3,5-trimethylhexahydro-1,3,5-triazine (available from Tokyo Chemical Industry Co., Ltd.) were sequentially dissolved in 500 ml of a solvent mixture containing isopropanol and water (volume ratio of isopropanol and water: 5:1) to prepare a mixed solution.

Next, the obtained mixed solution was reacted at 60°C for five hours under simultaneous application of ultrasonic waves and stirring (at 400 rpm). The solution was filtered through a Teflon® membrane filter, and the obtained particles were washed with ethanol three times, followed by vacuum-drying at 50°C for three hours. Then, the vacuum-dried particles were placed in a crucible with a lid and heat-treated at 200°C for 12 hours in a nitrogen atmosphere. Thus, naphthoxazine resin particles were obtained.

Aluminum was used as the near-infrared reflective material, and the obtained naphthoxazine resin particles

were used as the near-infrared transmissive material.

An aluminum plate (thickness: 300 pm) was coated with naphthoxazine resin particles to a thickness of 20 μm. Thus, a laminate including the aluminum plate and the naphthoxazine resin was obtained.

(Example 2)

Aluminum oxide particles ($Al_2O_3$, average particle size: 3 um, band gap: 8.8 eV) were used as the near-infrared reflective material.

An amount of 1.43 g of 1,5-dihydroxynaphthalene (available from Tokyo Kasei Co., Ltd.), 1.36 g of a 40 wt% methylamine aqueous solution (available from FUJIFILM Wako Pure Chemical Industries, Ltd.), and 2.84 g of a 37 wt% formaldehyde aqueous solution (available from FUJIFILM Wako Pure Chemical Industries, Ltd.) were dissolved in 350 ml of ethanol to prepare a mixed solution.

To the obtained mixed solution was added 5.0 g of aluminum oxide particles. The mixture was reacted at 50°C for five hours under simultaneous application of ultrasonic waves and stirring (at 350 rpm). Then, the particles were separated from the solution by filtration and washing.

Next, the separated particles were added to the mixed solution prepared in the same manner as above, and reacted in the same manner. The solution was filtered through a Teflon® membrane filter, and the obtained particles were washed with ethanol three times, followed by vacuum-drying at 50°C for three hours. Then, the vacuum-dried particles were placed in a crucible with a lid and heat-treated at 200°C for 12 hours in a nitrogen atmosphere. Thus, black particles each including a shell containing a naphthoxazine resin and a core containing aluminum oxide were obtained.

(Comparative Example 1)

An aluminum plate (thickness: 300 um) was used as in Example 1 but without application of the naphthoxazine resin.

(Comparative Example 2)

A laminate including an aluminum plate and carbon black particles was obtained by the same procedure as in Example 1 except that carbon black particles, instead of the naphthoxazine resin, were applied.

(Comparative Example 3)

Aluminum oxide particles (average particle size: 3 μm) were used as in Example 2 but without production of the naphthoxazine resin.

(Evaluation method)

(1) Shell thickness

The shell thickness was determined by analyzing an FE-SEM image of the black particles obtained in the example using image analysis software (WINROOF, available from Mitani Corporation) and calculating the average of the shell thicknesses of 20 black particles.

(2) Average reflectance, average transmittance, and lightness L*

The near-infrared reflective materials used in the examples and comparative examples were subjected to measurement of the reflectance spectra in the visible light region of 400 to 800 nm wavelength and in the near-infrared region of 900 to 2,500 nm wavelength using a spectrophotometer equipped with an integrating sphere (V-670, available from Jasco Corporation). The geometric average of the reflectance in each wavelength range was determined as the average value of the reflectance in each wavelength range. Thus, the average reflectance was determined.

As for the near-infrared transmissive material obtained in the examples and the carbon black particles used in the comparative example, the average reflectance in the visible light region from 400 to 800 nm wavelength and the average transmittance in the near infrared region from 900 to 2500 nm wavelength were determined in the same manner.

As for the laminate and black particles obtained in the examples and the laminate obtained in the comparative example, the average reflectance in the visible light region from 400 to 800 nm wavelength and the average reflectance in the near infrared region from 900 to 2500 nm wavelength were determined in the same manner.

The laminate and black particles obtained in the examples, the aluminum plate and aluminum oxide particles used in the comparative examples, and the laminate obtained in the comparative example were subjected to measurement of lightness values L* in the LAB (L*a*b*) color system using a spectrophotometer equipped with an integrating sphere (V-670, Jasco Corporation) in accordance with JIS Z 8722:2009.

[Table 1]

| | Near-infrared reflective material | | | | | Near-infrared transmissive material | | | | | Evaluation | | | | | | | | | |
|---|---|---|---|---|---|---|---|---|---|---|---|---|---|---|---|---|---|---|---|---|
| | | | | | | | | | | | L* | Average reflectance in visible light region (%) | | | | Average reflectance in near-infrared region (%) | | | | |
| | | | | | | | | | | | | Wavelength (nm) | | | Average | Wavelength (nm) | | | | Average |
| | Material | Average core particle size (µm) | Thickness of layer (µm) | Average reflectance in visible light region (%) | Average reflectance in near-infrared region (%) | Material | Shell thickness (µm) | Thickness of layer (µm) | Average reflectance in visible light region (%) | Average reflectance in near-infrared region (%) | | 400 | 550 | 800 | | 950 | 1200 | 1800 | 2400 | |
| Example 1 | Al plate | - | 300 | 0.5 | 87.8 | Naphthoxazine resin particles | - | 20 | 6.1 | 82 | 15.6 | 6.3 | 6.1 | 11.6 | 6.7 | 57.5 | 80.4 | 90.2 | 72.1 | 78.7 |
| Example 2 | $Al_2O_3$ particles | 3 | - | 25 | 80.3 | Naphtoxazine resin | 0.5 | - | 10.2 | 75 | 28.5 | 9.3 | 9.6 | 12.5 | 11.5 | 51.6 | 70.5 | 82.6 | 57.2 | 64.5 |
| Comparative Example 1 | Al plate | - | 300 | 0.5 | 87.8 | - | - | - | - | - | 80.1 | 68.6 | 73.2 | 72.5 | 72.6 | 79.2 | 85.5 | 89.9 | 91.5 | 87.8 |
| Comparative Example 2 | Al plate | - | 300 | 0.5 | 87.8 | Carbon black particles | - | 30 | 7.1 | 6.8 | 14.5 | 7.7 | 7.0 | 6.6 | 6.9 | 6.4 | 6.2 | 5.9 | 5.8 | 6.1 |
| Comparative Example 3 | $Al_2O_3$ particles | 3 | - | 25 | 80.3 | - | - | - | - | - | 80.9 | 74.6 | 74.8 | 73.1 | 74.5 | 75.1 | 75.6 | 79.4 | 90.4 | 80.3 |

INDUSTRIAL APPLICABILITY

The present invention can provide near-infrared reflective black particles and a near-infrared reflective laminate

each exhibiting high blackness, having high reflectivity in the near-infrared region, and useful for applications such as heat-shielding paints for automobile interiors and exteriors, buildings, ships, tanks, warehouses, and the like, heat-shielding compositions for clothing and textiles, and security identification/anti-counterfeiting inks.

## Claims

**1.** Near-infrared reflective black particles each comprising:

a shell containing a near-infrared transmissive material; and
a core containing a near-infrared reflective material,
the near-infrared reflective black particles having an average reflectance of 15% or lower in a visible light region from 400 to 800 nm wavelength, an average reflectance of 50% or higher in a near-infrared region from 900 to 2500 nm wavelength, and a lightness value L* of 30 or less in the CIE LAB (L*a*b*) color system.

**2.** The near-infrared reflective black particles according to claim 1,
wherein the near-infrared transmissive material has an average transmittance of 60% or higher in the near-infrared region from 900 to 2500 nm wavelength.

**3.** The near-infrared reflective black particles according to claim 1 or 2,
wherein the near-infrared reflective material has an average reflectance of 70% or higher in the near-infrared region from 900 to 2500 nm wavelength.

**4.** The near-infrared reflective black particles according to any one of claims 1 to 3,
wherein the near-infrared transmissive material is a naphthoxazine resin.

**5.** The near-infrared reflective black particles according to any one of claims 1 to 4,
wherein the near-infrared reflective material is a metal.

**6.** The near-infrared reflective black particles according to any one of claims 1 to 4,
wherein the near-infrared reflective material includes an inorganic material having a band gap of 3.0 eV or more.

**7.** The near-infrared reflective black particles according to claim 6,
wherein the inorganic material includes at least one selected from the group consisting of oxides, sulfides, nitrides, sulfates, carbonates, and hydroxides of metals or metalloids.

**8.** The near-infrared reflective black particles according to claim 7,
wherein the inorganic material includes at least one selected from the group consisting of barium sulfate, aluminum oxide, boron nitride, zinc oxide, titanium dioxide, zirconium oxide, silicon dioxide, zinc sulfide, and calcium carbonate.

**9.** A paint comprising the near-infrared reflective black particles according to any one of claims 1 to 8.

**10.** An ink comprising the near-infrared reflective black particles according to any one of claims 1 to 8.

**11.** A near-infrared reflective laminate comprising:

a layer containing a near-infrared transmissive material; and
a layer containing a near-infrared reflective material, laminated on each other to constitute a laminated structure,
the near-infrared reflective laminate having an average reflectance of 15% or lower in a visible light region from 400 to 800 nm wavelength, an average reflectance of 50% or higher in a near-infrared region from 900 to 2500 nm wavelength, and a lightness value L* of 30 or less in the CIE LAB (L*a*b*) color system.

## INTERNATIONAL SEARCH REPORT

International application No. **PCT/JP2021/031819**

**A. CLASSIFICATION OF SUBJECT MATTER**

***G02B 5/26***(2006.01)i
FI: G02B5/26

According to International Patent Classification (IPC) or to both national classification and IPC

**B. FIELDS SEARCHED**

Minimum documentation searched (classification system followed by classification symbols)

G02B5/26

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2002-249676 A (DAINICHISEIKA COLOR & CHEM MFG CO LTD) 06 September 2002 (2002-09-06)<br>claims, paragraphs [0015], [0039], [0060], table 4 | 1-3, 5-10 |
| Y | | 4 |
| A | | 11 |
| A | JP 2002-068780 A (CENTRAL GLASS CO LTD) 08 March 2002 (2002-03-08)<br>paragraph [0031], fig. 1 | 1-2 |
| Y | HANO, Nanami et al. Monodisperse Surface-Charge-Controlled Black Nanoparticles for Near-Infrared Shielding. ACS Appl. Nano Mater., 29 April 2019, vol. 2, pp. 3597-3605<br>page 3602, fig. 4-5 | 4 |
| X | JP 04-246478 A (NIPPON PAINT CO LTD) 02 September 1992 (1992-09-02)<br>claims, paragraphs [0021], [0028]-[0040] | 11 |
| A | | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 October 2021** | **26 October 2021** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No. PCT/JP2021/031819

C. DOCUMENTS CONSIDERED TO BE RELEVANT

| Category* | Citation of document, with indication, where appropriate, of the relevant passages | Relevant to claim No. |
|---|---|---|
| X<br>A | JP 2019-064139 A (DAINIPPON PRINTING CO LTD) 25 April 2019 (2019-04-25) paragraphs [0206], [0208], fig. 13 | 11<br>1-10 |
| A | JP 2018-036629 A (CANON KK) 08 March 2018 (2018-03-08) entire text, all drawings | 1-11 |
| A | JP 2010-530448 A (ECKART GMBH) 09 September 2010 (2010-09-09) entire text, all drawings | 1-10 |
| A | JP 2007-526930 A (QINETIQ LTD) 20 September 2007 (2007-09-20) entire text, all drawings | 1-10 |
| A | WO 2016/047606 A1 (SEKISUI CHEMICAL CO., LTD) 31 March 2016 (2016-03-31) entire text, all drawings | 1-10 |
| A | JP 2020-129670 A (DAINIPPON PRINTING CO LTD) 27 August 2020 (2020-08-27) entire text, all drawings | 11 |
| A | NOGUCHI, Hiroki et al. Novel Black Organic Phase for Ultra Selective Retention by Surface Modification of Porous Silica. Chem. Lett., 10 June 2017, vol. 46, pp. 1233-1236 entire text, all drawings | 1-10 |

Form PCT/ISA/210 (second sheet) (January 2015)

**INTERNATIONAL SEARCH REPORT**
**Information on patent family members**

International application No.
**PCT/JP2021/031819**

| Patent document cited in search report | Publication date (day/month/year) | Patent family member(s) | Publication date (day/month/year) |
|---|---|---|---|
| JP 2002-249676 A | 06 September 2002 | US 2002/0129739 A1<br>claims, paragraphs [0027], [0050], [0072], table 4<br>EP 1217044 A2<br>CA 2363879 A1<br>TW 593569 B<br>KR 2002-0050708 A<br>CN 1359982 A | |
| JP 2002-068780 A | 08 March 2002 | (Family: none) | |
| JP 04-246478 A | 02 September 1992 | (Family: none) | |
| JP 2019-064139 A | 25 April 2019 | (Family: none) | |
| JP 2018-036629 A | 08 March 2018 | (Family: none) | |
| JP 2010-530448 A | 09 September 2010 | US 2010/0242793 A1<br>entire text, all drawings<br>WO 2008/155038 A2<br>DE 102007028842 A1<br>CN 101688072 A<br>KR 10-2010-0050465 A | |
| JP 2007-526930 A | 20 September 2007 | US 2006/0159922 A1<br>entire text, all drawings<br>GB 2403724 A<br>WO 2005/007754 A1<br>CA 2532180 A1 | |
| WO 2016/047606 A1 | 31 March 2016 | US 2017/0190964 A1<br>entire text, all drawings<br>EP 3199494 A1<br>CN 106660822 A | |
| JP 2020-129670 A | 27 August 2020 | US 2017/0298239 A1<br>entire text, all drawings<br>WO 2016/052641 A1<br>EP 3202861 A1<br>TW 201631060 A<br>CN 106795383 A<br>KR 10-2017-0063719 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S56109257 A
- JP 5021174 B